# EUROPÄISCHE PATENTANMELDUNG

(11) **EP 4 807 229 A1**
(43) Veröffentlichungstag der Anmeldung: **16.09.2026**
(21) Anmeldenummer: 26164161.7
(22) Anmeldetag: 12.03.2026
(51) Int. Cl.: F16L 3/10, F16L 3/11, F16L 55/035

(54) **SCHALLDÄMMEINLAGE AUS EINEM DÄMMMATERIAL FÜR EINE ROHRSCHELLE UND ROHRSCHELLE, DIE EINE DERARTIGE SCHALLDÄMMEINLAGE UMFASST**

(30) Priorität: 14.03.2025 DE 102025109931
(71) Anmelder: REHAU Industries SE & Co. KG, 95111 Rehau (DE)
(72) Erfinder: Hennauer, René, 90427 Nürnberg (DE)

(57) **Zusammenfassung**

Die vorliegende Erfindung betrifft eine Schalldämmeinlage (1) aus einem Dämmmaterial für eine Rohrschelle (7, 7') mit mindestens einem Schellenbügel (6), wobei die Schalldämmeinlage (1) im Querschnitt aus einem Zentralbereich (2), der einen Aufnahmebereich (5) zur zumindest teilweisen Aufnahme des mindestens einen Schellenbügels (6) und einen Anlagebereich (4) zur Anlage der Schalldämmeinlage (1) an einem in die Rohrschelle (6) aufgenommenen Leitungselement umfasst, und mindestens einem Lateralbereich (3, 3') aufgebaut ist, wobei sich die Schalldämmeinlage (1) erfindungsgemäß dadurch auszeichnet, dass die Außenkontur der Schalldämmeinlage (1) mindestens eines Lateralbereichs (3, 3') im Querschnitt mindestens einen gekrümmt verlaufenden Abschnitt (9, 9') und mindestens einen linear verlaufenden Abschnitt (10) umfasst. Darüber hinaus betrifft die vorliegende Erfindung eine Rohrschelle (7, 7'), die mindestens einen Schellenbügel (6); und mindestens eine erfindungsgemäße Schalldämmeinlage (1) umfasst wobei der mindestens eine Schellenbügel (6) zumindest teilweise im Aufnahmebereich (5) in die Schalldämmeinlage (1) aufgenommen ist.

## Beschreibung

Die vorliegende Erfindung betrifft eine Schalldämmeinlage aus einem Dämmmaterial für eine Rohrschelle mit mindestens einem Schellenbügel, wobei die Schalldämmeinlage im Querschnitt aus einem Zentralbereich, der einen Aufnahmebereich zur zumindest teilweisen Aufnahme des mindestens einen Schellenbügels und einen Anlagebereich zur Anlage der Schalldämmeinlage an einem in die Rohrschelle aufgenommenen Leitungselement umfasst, und mindestens einem Lateralbereich aufgebaut ist. Darüber hinaus bezieht sich die vorliegende Erfindung auf eine Rohrschelle, die mindestens einen Schellenbügel und mindestens eine derartige Schalldämmeinlage umfasst, wobei der Schellenbügel zumindest teilweise im Aufnahmebereich der Schalldämmeinlage aufgenommen ist.

Derartige Schalldämmeinlagen und diese umfassende Rohrschellen sind aus dem Stand der Technik bekannt. Die Rohrschellen werden zur Befestigung und Halterung von Leitungselementen, beispielsweise von Rohren, aber auch von Kabeln, an einem Baukörper, beispielsweise an einer Decke oder einer Wand eines Gebäudes eingesetzt. Die Schalldämmeinlagen solcher Rohrschellen bestehen häufig aus einem elastischen Material und sind an der dem Leitungselement zugewandten Seite des Schellenbügels angeordnet. Auf diese Weise dienen sie zur Körperschallentkopplung zwischen dem Leitungselement und dem Baukörper. Eine derartige Rohrschelle und eine zugehörige Schalldämmeinlage sind beispielsweise aus der EP 0 585 543 A1 bekannt. Aus der EP 0 585 543 A1 ist eine zwei derartige Rohrschellen umfassende Rohrbefestigungsvorrichtung bekannt, in der die erste als Fixierschelle ein darin aufgenommenes Rohr fest umspannt, während die zweite als Stützschelle das Rohr mit einer gewissen Toleranz umgibt und beispielsweiser an einer Gebäudewand befestigt ist, wobei die beiden Schalldämmeinlagen aneinander anliegen. Dabei ist die Schalldämmeinlage der Stützschelle im Anlagebereich mit einer Ausnehmung versehen, während die Schalldämmeinlage der Fixierschelle im Anlagebereich gerade verläuft. Nachteilig an der aus der EP 0 585 543 A1 bekannten Schalldämmeinlage wird gesehen, dass dies beim Schließen und Öffnen des Schellenbügels verkanten können, was die Montage der Rohrbefestigungsvorrichtung insbesondere dann erschwert, wenn die Öffnungen der Schellenbügel in unterschiedlichen Orientierungen montiert werden sollen.

An dieser Stelle setzt die vorliegende Erfindung ein, der die Aufgabe zugrunde liegt, eine Schalldämmeinlage zur Verfügung zu stellen, die die Nachteile des Stands der Technik zumindest teilweise überwindet. Insbesondere soll es die erfindungsgemäße Schalldämmeinlage bei hoher Körperschalldämmung eine einfache Montage zu ermöglichen. Darüber hinaus liegt die vorliegende Erfindung in der Bereitstellung einer Rohrschelle, die eine derartige Schalldämmeinlage umfasst.

Diese und andere Aufgaben werden durch eine Schalldämmeinlage mit den Merkmalen des Anspruchs 1 bzw. durch eine Rohrschelle mit den Merkmalen des Anspruchs 8 gelöst. Bevorzugte Ausführungsformen der erfindungsgemäßen Schalldämmeinlage bzw. der erfindungsgemäßen Rohrschelle sind in den abhängigen Ansprüchen beschrieben.

Gemäß der vorliegenden Erfindung wurde erkannt, dass ein Verkanten der Schalldämmeinlagen beim Schließen und Öffnen der Schellenbügel durch eine geschickte Wahl ihrer Außenkonturen vermieden werden kann. Erfindungsgemäß wird dies dadurch realisiert, dass die Außenkontur der Schalldämmeinlage an den Seiten abgerundeten Bereich und einen linearen Bereich aufweist. Beim Schließen und Öffnen der Schellenbügel kann eine der Schalldämmeinlagen dann mit ihrem abgerundeten Bereich entlang des linearen Bereichs der benachbarten Schalldämmeinlage gleiten, ohne dass es zu einem Verkanten kommen kann. Dies erleichtert die Montage einer Rohrbefestigungsvorrichtung, in der zwei derartige Rohrschellen seitlich aneinander anliegen, beträchtlich. Darüber hinaus kommt es im Falle einer Doppelrohrschelle beim Schließen des Schellenbügels durch das Gleiten des abgerundeten Bereichs der einen Schalldämmeinlage entlang des linearen Bereichs der benachbarten Schalldämmeinlage zu einer Zentrierung des in die Rohrschelle aufgenommenen Leitungselements. Dies trägt zusätzlich zur Körperdämmung bei.

Dementsprechend stellt die vorliegende Erfindung eine Schalldämmeinlage aus einem Dämmmaterial für eine Rohrschelle mit mindestens einem Schellenbügel zur Verfügung, wobei die Schalldämmeinlage im Querschnitt aus einem Zentralbereich, der einen Aufnahmebereich zur zumindest teilweisen Aufnahme des mindestens einen Schellenbügels und einen Anlagebereich zur Anlage der Schalldämmeinlage an einem in die Rohrschelle aufgenommenen Leitungselement umfasst, und mindestens einem Lateralbereich aufgebaut ist, wobei sich die Schalldämmeinlage erfindungsgemäß weiter dadurch auszeichnet, dass die Außenkontur der Schalldämmeinlage mindestens eines Lateralbereichs im Querschnitt mindestens einen gekrümmt verlaufenden Abschnitt und mindestens einen linear verlaufenden Abschnitt umfasst. Darüber hinaus stellt die vorliegende Erfindung eine Rohrschelle zur Verfügung, die mindestens einen Schellenbügel und mindestens eine erfindungsgemäße Schalldämmeinlage umfasst, wobei der mindestens eine Schellenbügel zumindest teilweise im Aufnahmebereich in die Schalldämmeinlage aufgenommen ist.

Der Aufbau der erfindungsgemäßen Schalldämmeinlage im Querschnitt aus einem Zentralbereich, der den Aufnahmebereich und den Anlagebereich umfasst, und mindestens einem Lateralbereich es, die Materialien der einzelnen Bereiche spezifisch auf die jeweiligen Anforderungen anzupassen. Vorzugsweise weist die erfindungsgemäße Schalldämmeinlage zwei Lateralbereiche auf. Die beiden Lateralbereiche können dabei an zwei einander gegenüberliegenden Seiten des Zentralbereichs angeordnet sein.

In Bezug auf die erfindungsgemäße Schalldämmeinlage kann es von Vorteil sein, wenn sich der mindestens eine gekrümmt verlaufende Abschnitt und/oder der mindestens eine linear verlaufende Abschnitt im Querschnitt über mindestens 15 % der Außenkontur des entsprechenden Lateralbereichs erstreckt. Dabei ist es bevorzugt, wenn sich der mindestens eine gekrümmt verlaufende Abschnitt und/oder der mindestens eine linear verlaufende Abschnitt im Querschnitt über mindestens 20 %, insbesondere mindestens 25% der Außenkontur des entsprechenden Lateralbereichs erstreckt. Ein derartiger Anteil des mindestens einen gekrümmt verlaufenden Abschnitts und/oder des mindestens einen linear verlaufenden Abschnitts im Querschnitt reicht dabei zur Vermeidung des Verkanten beim Schließen und Öffnen der Schellenbügel aus.

Hinsichtlich der Geometrie der Lateralbereiche kann es bevorzugt sein, wenn sich der gekrümmt verlaufende Abschnitt bis zu der vom Zentralbereich am weitesten entfernten Stelle des Lateralbereichs erstreckt. Der gekrümmt verlaufende Abschnitt kann vorzugsweise teilkreisförmig, insbesondere viertelkreisförmig ausgebildet sein, kann aber auch teilelliptisch ausgebildet sein und/oder sich über einen anderen Winkelbereich erstrecken. Zusätzlich oder alternativ dazu kann es von Vorteil sein, wenn der linear verlaufende Abschnitt schräg vom Zentralbereich weg verläuft. Zusätzlich oder alternativ dazu kann der der linear verlaufende Abschnitt unmittelbar in den gekrümmt verlaufenden Abschnitt übergehen. Eine derartige Geometrie des Lateralbereichs fördert die leichte Montage der erfindungsgemäßen Rohrschelle. Besonders bevorzugt verläuft der linear verlaufende Abschnitt bis zu der Stelle des Lateralbereichs, die am weitesten vom Zentralbereich entfernt ist, und geht dort vorzugsweise in den abgerundeten Bereich über.

Es kann auch von Vorteil sein, wenn es sich bei dem Dämmmaterial der Schalldämmeinlage um ein elastisches Material, insbesondere um ein thermoplastisches Elastomer (TPE), handelt. Dabei sind thermoplastische Elastomere auf Basis von PVC (Polyvinylchlorid), PP/EPDM (Polypropylen/Ethylen-Propylen-Dien-(Monomer)-Kautschuk) sowie TPS (Compounds auf Basis von SBS oder SEBS), SBS (Styrol-Butadien-Blockcopolymere) und SEBS (Styrol-Ethylen-Butadien-Blockcopolymere) besonders bevorzugt.

In Bezug auf die für die erfindungsgemäße Schalldämmeinlage eingesetzten Materialien ist es bevorzugt, wenn der/die mindestens eine Lateralbereich(e) aus einem im Vergleich zum Zentralbereich weicheren Material ausgebildet ist. In bevorzugten Ausführungsformen weist das thermoplastische Material des Zentralbereichs eine Shore-Härte (Shore A) im Bereich von 35 Shore A bis 65 Shore A, insbesondere im Bereich von 40 Shore A bis 60 Shore A und ganz besonders bevorzugt) im Bereich von 45 Shore A bis 55 Shore A auf. Besonders bevorzugt weist das thermoplastische Material des Zentralbereichs eine Shore-Härte (Shore A) von etwa 50 Shore A auf. Die Härte des Materials des Lateralbereichs liegt vorzugsweise im Bereich von 10 Shore A bis 30 Shore A und insbesondere im Bereich von 15 Shore A bis 26 Shore A. In besonders bevorzugten Ausführungsformen weist das thermoplastische Material des Lateralbereichs eine Shore-Härte (Shore A) von etwa 21 Shore A auf. Die angegeben Werte der Shore-Härte (Shore A) beziehen sich jeweils dabei auf die Norm DIN ISO 53505 (2000-08).

Es kann auch hilfreich sein, wenn die Schalldämmeinlage mindestens einen sich in Längsrichtung der Schalldämmeinlage erstreckenden Hohlraum umfasst. Ein solcher Hohlraum dient zur Körperschalldämmung zwischen dem Leitungselement und dem Baukörper erforderliche Hohlraum. Dadurch die zum Leitungselement gerichtete Oberfläche der Schalldämmeinlage im Wesentlichen eben ausgebildet sein. Dadurch liegt die Schalldämmeinlage mit einem größeren Anteil ihrer Oberfläche an dem in die Rohrschelle aufgenommenen Leitungselement an, was zu einer hohen Auszugskraft führt, die aufgebracht werden muss, um das Leitungselement aus der Rohrschelle herauszuziehen. Dadurch ist die Gefahr eines Wasserschadens erheblich reduziert.

Dabei ist es bevorzugt, wenn diese mehr als einen sich in Längsrichtung der Schalldämmeinlage erstreckenden Hohlraum, insbesondere zwei, drei, vier, fünf, sechs, sieben, acht usw. sich in Längsrichtung der Schalldämmeinlage erstreckende Hohlräume umfasst. Es hat sich gezeigt, dass mit einer wachsenden Anzahl derartiger Hohlräume die Körperschalldämmungseigenschaften der erfindungsgemäßen Schalldämmeinlage weiter verbessert werden.

Zusätzlich oder alternativ dazu kann es hilfreich sein, wenn die nach außen gerichtete Oberfläche des Anlagebereichs im Wesentlichen eben oder gewellt ausgebildet ist. Wenn der Anlagebereich eben an der Oberfläche eines in die erfindungsgemäße Rohrschelle aufgenommenen Leitungselements, insbesondere eines Rohrs anliegt, ist die Auszugskraft hoch. Dadurch ist die Gefahr des Herauslösens des Leitungselements aus der erfindungsgemäßen Rohrschelle gering und die damit einhergehende Wahrscheinlichkeit eines Wasserschadens ebenfalls. Eine wellenförmig ausgebildete Oberfläche des Anlagebereichs verbessert die Körperschalldämmungseigenschaften der erfindungsgemäßen Schalldämmeinlage.

Wie hierin verwendet bedeutet der Begriff "im Wesentlichen eben" in Bezug auf eine Oberfläche, dass die entsprechende Oberfläche keine Unebenheiten, wie beispielsweise Rillen, Riefen, Lamellen oder dergleichen, umfasst, die über Ungenauigkeiten bei der Herstellung der erfindungsgemäßen Schalldämmeinlage hinausgehen. Darüber hinaus können in Randbereichen der Oberfläche gegebenenfalls Krümmungen vorhanden sein, die einen glatten Übergang zu anderen Bereichen der erfindungsgemäßen Schalldämmeinlage gewährleisten.

Es kann auch günstig sein, wenn der mindestens eine Lateralbereich mindestens einen Lateralbereichshohlraum aufweist. Auf diese Weise können die Körperschalldämmeigenschaften der erfindungsgemäßen Schalldämmeinlage weiter verbessert werden. Der mindestens eine Lateralbereichshohlraum erstreckt sich vorzugsweise ebenfalls in Längsrichtung der erfindungsgemäßen Schalldämmeinlage.

Die in Bezug auf die erfindungsgemäße Schalldämmeinlage erläuterten vorteilhaften Merkmale und Eigenschaften gelten für die erfindungsgemäße Rohrschelle entsprechend.

Zusätzlich kann es in Bezug auf die erfindungsgemäße Rohrschelle bevorzugt sein, wenn die Rohrschelle weiter mindestens ein Schließelement zum Verschließen des mindestens einen Schellenbügels und/oder mindestens ein Befestigungselement zum Befestigen der Rohrschelle an einem Baukörper umfasst. Als Schließelement kommt vorzugsweise ein Schnellspannverschluss in Betracht, mit dem der Schellenbügel um das in die erfindungsgemäße Rohrschelle aufgenommene Leitungselement herum gespannt werden kann. Im geschlossenen Zustand des Schließelements liegt die nach außen gerichtete Oberfläche des Anlagebereichs der erfindungsgemäßen Schalldämmeinlage vorzugsweise flächig an dem Leitungselement an. Als Befestigungselement kann beispielsweise ein Innengewinde, insbesondere eine Innengewindemutter, mit dem Schellenbügel verbunden sein. Über einen in das Innengewinde eingedrehten Gewindestift kann die erfindungsgemäße Rohrschelle an dem Bauelement, beispielsweise an einer Decke oder an einer Wand eines Gebäudes, befestigt werden.

Es kann auch günstig sein, wenn die erfindungsgemäße Rohrschelle als Mehrfachrohrschelle, insbesondere als Doppelrohrschelle, ausgebildet ist. Im Falle einer derartigen Mehrfachrohrschelle kann mindestens eine erfindungsgemäße Rohrschelle als Fixierschelle und gleichzeitig mindestens eine weitere erfindungsgemäße Rohrschelle als Stützstelle fungieren. Eine Fixierschelle dient zur Befestigung einer die erfindungsgemäße Rohrschelle umfassenden Rohranordnung an einem Bauelement, insbesondere an einer Decke oder an einer Wand eines Gebäudes. Eine Stützschelle stützt sich auf einer Fixierschelle ab, d. h. die Stützschelle liegt zumindest abschnittsweise an der vertikal darunter angeordneten Fixierschelle an, und stützt gleichzeitig die Rohranordnung, die das in die erfindungsgemäße Rohrschelle aufgenommene Leitungselement und die entsprechende Doppelrohrschelle umfasst. Dementsprechend kann es in diesem Zusammenhang bevorzugt sein, wenn die jeweilige Schalldämmeinlage von zwei benachbarten Rohrschellen zumindest abschnittsweise aneinander anliegen. Dadurch wird die Übertragung des durch ein durch das Leitungselement strömende Medium erzeugten Körperschalls weiter verringert.

In diesem Zusammenhang kann es besonders bevorzugt sein, wenn die Schalldämmeinlage von mindestens zwei benachbarten Rohrschellen zumindest abschnittsweise aneinander anliegen. Dies dient zu einer weiter reduzierten Übertragung von Körperschall.

Die erfindungsgemäße Schalldämmeinlage sowie die erfindungsgemäße Rohrschelle können auch zeilenweise oder schichtweise unter Verwendung eines zeilenaufbauenden oder schichtaufbauenden Fertigungsverfahrens (z. B. 3D-Druck) hergestellt werden. Bevorzugt wird die erfindungsgemäße Schalldämmeinlage jedoch mittels Extrusion hergestellt und in entsprechende Abschnitte abgelängt.

Im Folgenden soll die vorliegende Erfindung unter Bezugnahme auf die in den Figuren dargestellten Ausführungsformen im Detail erläutert werden. Dabei zeigen
- Figur 1: eine schematische Querschnittsdarstellung einer Schalldämmeinlage gemäß einer Ausführungsform der vorliegenden Erfindung;
- Figur 2: eine partielle, schematische Querschnittsdarstellung zweier aneinander anliegenden Schalldämmeinlagen gemäß Fig. 1;
- Figur 3: eine schematische Querschnittsdarstellung einer Schalldämmeinlage gemäß einer weiteren Ausführungsform der vorliegenden Erfindung;
- Figur 4: eine schematische Darstellung einer Ausführungsform der erfindungsgemäßen Rohrschelle, die die in Fig. 1 gezeigte Schalldämmeinlage umfasst; und
- Figur 5: eine schematische Darstellung einer weiteren Ausführungsform der erfindungsgemäßen Rohrschelle, die die in Fig. 1 gezeigte Schalldämmeinlage umfasst;

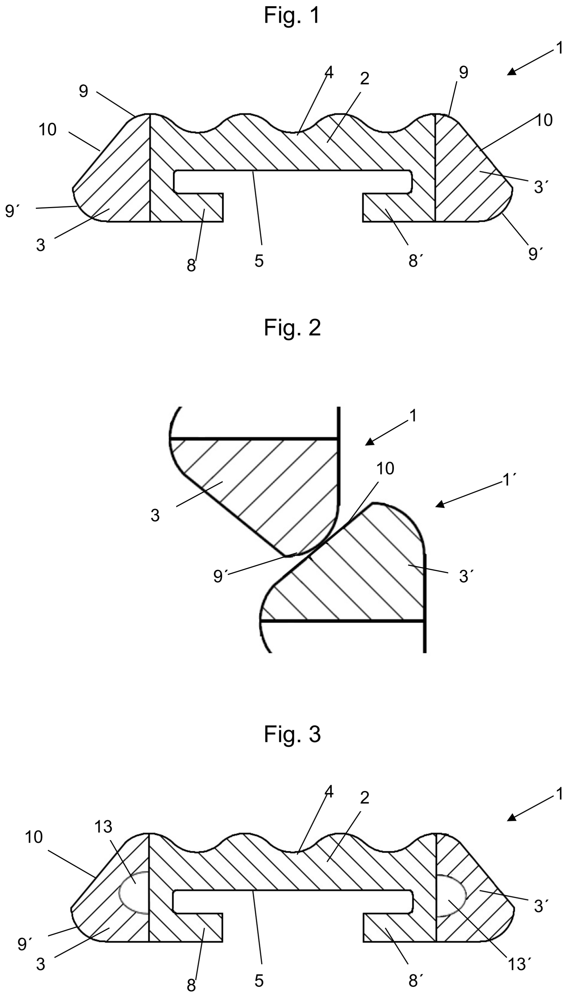

In Fig. 1 ist eine Schalldämmeinlage 1 gemäß einer Ausführungsform der vorliegenden Erfindung in einer schematischen Querschnittsdarstellung gezeigt. Die erfindungsgemäße Schalldämmeinlage 1 umfasst einen zentral angeordneten Zentralbereich 2 und zwei Lateralbereiche 3, 3', die an zwei gegenüberliegenden Seiten des Zentralbereichs 2 angeordnet sind, vorzugsweise stoffschlüssig mit dem Zentralbereich 2 verbunden sind (beispielsweise durch Verschweißen, Verschmelzen oder Verkleben).

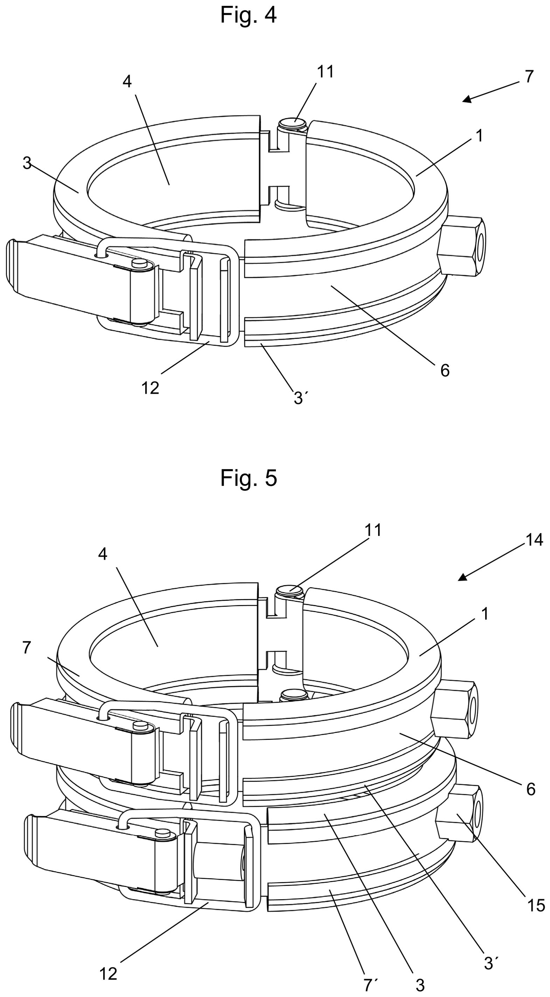

Die beiden freien Seiten des Zentralbereichs 2 fungieren als Anlagebereich 4 und als Aufnahmebereich 5 für einen Schellenbügel 6 (vgl. Fig. 4). Die Oberfläche des Anlagebereichs 4 ist wellenförmig ausgebildet, was zur Körperschalldämmung durch die erfindungsgemäße Schalldämmeinlage 1 beiträgt. In alternativen Ausführungsformen kann die Oberfläche des Anlagebereichs 4 der die erfindungsgemäßen Schalldämmeinlage 1 auch im Wesentlichen eben ausgebildet sein, wodurch ein flächiges Anliegen der Oberfläche des Anlagebereichs 4 an der Außenoberfläche eines Leitungselements (nicht dargestellt), insbesondere eines Rohres, das in eine die erfindungsgemäße Schalldämmeinlage 1 umfassende Rohrschelle 7 (vgl. Fig. 4) aufgenommen ist, erzielt wird. Der Aufnahmebereich 5 ist an der dem Anlagebereich 4 gegenüberliegenden Seite des Zentralbereichs 2 angeordnet. Die zur Außenseite gerichtete Oberfläche des Aufnahmebereichs 5 bildet zusammen mit freiliegenden Abschnitten der Lateralbereiche 3, 3' und zwei an den Lateralbereichen 3, 3' angeordneten Haltestegen 8, 8' einen Aufnahmeraum. In den Aufnahmeraum kann mindestens ein Schellenbügel 6 aufgenommen werden, der dann mit Ausnahme des Abstands zwischen den beiden Haltestegen 8, 8' im Querschnitt vollständig von der erfindungsgemäßen Schalldämmeinlage 1 umgeben ist, was für einen stabilen Sitz des mindestens einen Schellenbügel 6 in der erfindungsgemäßen Schalldämmeinlage 1 sorgt.

In der in Fig.1 dargestellten Ausführungsform der erfindungsgemäßen Schalldämmeinlage 1 sind die beiden Lateralbereiche 3, 3' achsensymmetrisch zueinander ausgebildet. Dabei umfasst jeder Lateralbereich 3, 3' in seiner Außenkontur im Querschnitt zwei gekrümmt verlaufende Abschnitte 9, 9' und einen linear verlaufenden Abschnitt 10. Dabei schließt sich an den Anlagebereich 4 zunächst der hier relativ kurz ausgebildete, gekrümmt verlaufende Abschnitt 9 an, der in den schräg vom Zentralbereich 5 weg linear verlaufenden Abschnitt 10 übergeht. An der vom Zentralbereich 5 am weitesten entfernten Stelle schließt sich an den linear verlaufenden Abschnitt 10 der zweite gekrümmt verlaufende Abschnitte 9' an. In der in Fig.1 dargestellten Ausführungsform ist der gekrümmt verlaufende Abschnitte 9' viertelkreisförmig ausgebildet, kann aber auch teilelliptisch ausgebildet sein und/oder sich über einen anderen Winkelbereich als 90° erstrecken. Im Querschnitt nimmt in der in Fig. 1 dargestellten Ausführungsform der erfindungsgemäßen Schalldämmeinlage 1 der linear verlaufende Abschnitt 10 etwa 75 % der Außenkontur des jeweiligen Lateralbereichs 3, 3', während der gekrümmt verlaufende Abschnitt 9' im Querschnitt etwa 20 % der Außenkontur der beiden Lateralbereichs 3, 3' ausmacht.

In Fig. 2 sind zwei aneinander anliegende Schalldämmeinlagen 1, 1' gemäß Fig. 1 in einer partiellen, schematischen Querschnittsdarstellung gezeigt. Daraus geht hervor, dass der Lateralbereich 3 der Schalldämmeinlage 1 mit seinem gekrümmt verlaufenden Abschnitt 9' an dem linear verlaufenden Abschnitt 10 des Lateralbereichs 3' der anderen Schalldämmeinlage 1' anliegt. Wird nun der Schellenbügel 6 der die Schalldämmeinlage 1 umfassenden Rohrschelle 7 geöffnet, kann sich diese ohne Hindernis von der anderen Schalldämmeinlage 1' entfernen. Es kann zu keinem Verkanten kommen. Beim Schließen der Rohrschelle 7 nähert sich der Lateralbereich 3 der Schalldämmeinlage 1 ohne Hindernis dem des Lateralbereichs 3' der anderen Schalldämmeinlage 1', bis es zu einem Anliegen kommt. Auch da kann es nicht zu einem Verkanten der beiden Lateralbereiche 3, 3' gegeneinander kommen. Dies erleichtert die Montage einer solchen Rohrbefestigungsvorrichtung beträchtlich. Dies gilt insbesondere dann, wenn die relative Position der beiden der Schließbügel 12 der Rohrschellen 7, 7' zueinander geändert werden muss.

Der Zentralbereich 2 und die Lateralbereiche 3, 3' sind gemäß der in Fig. 1 gezeigten Ausführungsform der erfindungsgemäßen Schalldämmeinlage 1 aus einem thermoplastischen Elastomer (TPE), vorzugsweise PP/EPDM, hergestellt. Dabei sind die Lateralbereiche 3, 3' mit einer Shore-Härte (Shore A) von etwa 24 Shore A weicher ausgebildet als der Zentralbereich 2 mit einer Härte von etwa 50 Shore A. Die angegeben Werte der Shore-Härte (Shore A) beziehen sich dabei auf die Norm DIN ISO 53505 (2000-08). Durch den weichen Charakter der Lateralbereiche 3, 3' wird die Körperschalldämmung zwischen zwei aneinander anliegenden erfindungsgemäßen Rohrschellen 7, 7' (vgl. 5) erhöht.

In Fig. 3 ist eine Schalldämmeinlage 1 gemäß einer weiteren Ausführungsform der vorliegenden Erfindung in einer schematischen Querschnittsdarstellung gezeigt. Um Wiederholungen zu vermeiden, wird bei der Erläuterung dieser weiteren Ausführungsform lediglich auf die Unterschiede zwischen den verschiedenen Ausführungsformen eingegangen. Ansonsten gelten die Ausführungen in Bezug auf die Ausführungsform gemäß Fig. 1 entsprechend. Identische Bezugszeichen stehen für gleiche Elemente.

Die in Fig. 3 dargestellte Schalldämmeinlage 1 unterscheidet sich von der in Fig. 1 gezeigten lediglich darin, dass die beiden Lateralbereiche 3, 3' zusätzlich jeweils einen sich in Längsrichtung der Schalldämmeinlage 1 erstreckenden Hohlraum 13, 13' aufweisen. Diese Hohlräume 13, 13' dienen zur Körperschallentkopplung zwischen dem am Anlagebereich 4 anliegenden Leitungselement und einem Bauelement, an dem die erfindungsgemäße Rohrschelle 7 befestigt ist. Zusätzlich oder alternativ dazu kann auch der Zentralbereich 2 einen oder mehrere solcher sich in Längsrichtung erstreckender Hohlräume aufweisen, die dann demselben Zweck dienen.

Fig. 4 zeigt eine schematische Darstellung einer Rohrschelle 7, die als Einzelrohrschelle ausgebildet ist und die in Fig. 1 gezeigte erfindungsgemäße Schalldämmeinlage 1 umfasst. Darin ist gut zu erkennen, dass der Schellenbügel 6 in den Aufnahmeraum der erfindungsgemäßen Schalldämmeinlage 1 aufgenommen ist. Dabei ist der Schellenbügel 6 zweiteilig ausgebildet, wobei die beiden Teile des Schellen 6 über ein Gelenkelement 11 verbunden sind. Im Bereich des Gelenkselements 11 ist die erfindungsgemäße Schalldämmeinlage 1 unterbrochen, sodass die beiden Teile des Schellenbügel 6 über das Gelenkselement 11 relativ zueinander beweglich sind.

An der dem Gelenkselement 11 gegenüberliegenden Seite der erfindungsgemäßen Rohrschelle 7 weist die Rohrschelle 7 ein Schließelement 12 auf. In der in Fig. 4 dargestellten Ausführungsform ist das Schließelement 12 bügelförmig ausgebildet, wobei der Bügel ein umgebogenes Ende des Schellenbügels 6 hintergreift. Das Schließelement 12 lässt sich mittels eines Hebels spannen, sodass der eben ausgebildete Anlagebereich 4 der erfindungsgemäßen Schalldämmeinlage 1 eines in die erfindungsgemäße Rohrschelle 7 eingelegten Leitungselements mit geeignetem Außendurchmesser an der Außenoberfläche des Leitungselements anliegt.

Darüber hinaus umfasst die erfindungsgemäße Rohrschelle 7 ein mit dem Schellenbügel 6 verbundenes Befestigungselement 15. In der in Fig. 4 dargestellten Ausführungsform der erfindungsgemäßen Rohrschelle 7 ist das Befestigungselement 15 in Form einer Innengewindemutter ausgebildet. Über einen in das Innengewinde eingedrehten Gewindestift kann die erfindungsgemäße Rohrschelle an einem Bauelement, beispielsweise an einer Decke oder an einer Wand eines Gebäudes, befestigt werden.

Letztlich zeigt Fig. 5 eine schematische Darstellung einer weiteren Ausführungsform der vorliegenden Erfindung in Form einer Doppelrohrschelle 14. In der in Fig. 3 gezeigten Ausführungsform umfasst die Doppelrohrschelle 14 zwei zueinander identische Rohrschellen 7, 7'. Dabei liegt der Lateralbereich 3' der in Fig. 5 oberen Rohrschelle 7 am Lateralbereich 3 der unteren Rohrschelle 7' an.

Die in Fig. 5 unten angeordnete Rohrschelle 7' fungiert in der Doppelrohrschelle 14 als Fixierschelle, über die eine die erfindungsgemäße Doppelrohrschelle 14 umfassende Rohranordnung an einem Bauelement, insbesondere an einer Decke oder an einer Wand eines Gebäudes, befestigt wird. Die in Fig. 5 oben angeordnete Rohrschelle 7 fungiert in der Doppelrohrschelle 14 dagegen als Stützschelle, die sich auf der unter ihr angeordneten Fixierschelle abstützt.

Die vorliegende Erfindung wurde exemplarisch unter Bezugnahme auf die in den Figuren dargestellten Ausführungsformen der vorliegenden Erfindung im Detail beschrieben. Es versteht sich, dass die vorliegende Erfindung nicht auf die in den Figuren dargestellte Ausführungsformen beschränkt ist. Vielmehr ergibt sich der Umfang der vorliegenden Erfindung aus den beigefügten Ansprüchen.

## Patentansprüche

1. Schalldämmeinlage (1) aus einem Dämmmaterial für eine Rohrschelle (7, 7') mit mindestens einem Schellenbügel (6), wobei die Schalldämmeinlage (1) im Querschnitt aus einem Zentralbereich (2), der einen Aufnahmebereich (5) zur zumindest teilweisen Aufnahme des mindestens einen Schellenbügels (6) und einen Anlagebereich (4) zur Anlage der Schalldämmeinlage (1) an einem in die Rohrschelle (6) aufgenommenen Leitungselement umfasst, und mindestens einem Lateralbereich (3, 3') aufgebaut ist,
**dadurch gekennzeichnet, dass**
die Außenkontur der Schalldämmeinlage (1) mindestens eines Lateralbereichs (3, 3') im Querschnitt mindestens einen gekrümmt verlaufenden Abschnitt (9, 9') und mindestens einen linear verlaufenden Abschnitt (10) umfasst.

2. Schalldämmeinlage (1) nach Anspruch 1, **dadurch gekennzeichnet, dass** sich der mindestens eine gekrümmt verlaufende Abschnitt (9, 9') und/oder der mindestens eine linear verlaufende Abschnitt (10) im Querschnitt über mindestens 15 % der Außenkontur des entsprechenden Lateralbereichs (3, 3') erstreckt.

3. Schalldämmeinlage (1) nach Anspruch 1 oder Anspruch 2, **dadurch gekennzeichnet, dass** der mindestens eine Lateralbereich (3, 3') aus einem im Vergleich zum Zentralbereich (2) weicheren Material ausgebildet ist.

4. Schalldämmeinlage (1) nach einem der Ansprüche 1 bis 3, **dadurch gekennzeichnet, dass** die Schalldämmeinlage (1) mindestens einen sich in Längsrichtung der Schalldämmeinlage (1) erstreckenden Hohlraum (13, 13') umfasst.

5. Schalldämmeinlage (1) nach Anspruch 4, **dadurch gekennzeichnet, dass** mindestens einer der Hohlräume (13, 13') in einem Lateralbereich (3, 3') angeordnet ist.

6. Schalldämmeinlage (1) nach einem der Ansprüche 1 bis 5, **dadurch gekennzeichnet, dass** es sich bei dem Dämmmaterial der Schalldämmeinlage (1) um ein elastisches Material, insbesondere um ein thermoplastisches Elastomer (TPE), handelt.

7. Schalldämmeinlage (1) nach einem der Ansprüche 1 bis 6, **dadurch gekennzeichnet, dass** die nach außen gerichtete Oberfläche des Anlagebereichs (4) im Wesentlichen eben oder wellenförmig ausgebildet ist.

8. Rohrschelle (7, 7'), umfassend:
(a) mindestens einen Schellenbügel (6); und
(b) mindestens eine Schalldämmeinlage (1) nach einem der Ansprüche 1 bis 7,
wobei der mindestens eine Schellenbügel (6) zumindest teilweise im Aufnahmebereich (5) in die Schalldämmeinlage (1) aufgenommen ist.

9. Rohrschelle (7, 7') nach Anspruch 8, **dadurch gekennzeichnet, dass** die Rohrschelle (7) weiter mindestens ein Schließelement (12) zum Verschließen des mindestens einen Schellenbügels (6) und/oder mindestens ein Befestigungselement (13) zum Befestigen der Rohrschelle (7, 7') an einem Baukörper umfasst.

10. Rohrschelle (7, 7') nach Anspruch 8 oder Anspruch 9, **dadurch gekennzeichnet, dass** die Rohrschelle (7, 7') als Mehrfachrohrschelle, insbesondere als Doppelrohrschelle (14), ausgebildet ist.

11. Rohrschelle (7, 7') nach Anspruch 10, **dadurch gekennzeichnet, dass** die Schalldämmeinlage (1) von mindestens zwei benachbarten Rohrschellen (7, 7') zumindest abschnittsweise aneinander anliegen.
